(19) Europäisches Patentamt
European Patent Office
Office européen des brevets

(11) EP 1 021 088 B1

(12) **EUROPEAN PATENT SPECIFICATION**

(45) Date of publication and mention of the grant of the patent:
**07.05.2003 Bulletin 2003/19**

(21) Application number: **98945390.7**

(22) Date of filing: **30.09.1998**

(51) Int Cl.$^{7}$: **A01N 43/653**, A01N 43/54
// A01N43:653, A01N43:54

(86) International application number:
**PCT/GB98/02902**

(87) International publication number:
**WO 99/016314 (08.04.1999 Gazette 1999/14)**

(54) **FUNGICIDE MIXTURES BASED ON FLUQUINCONAZOLE**

FUNGIZIDE ZUSAMMENSETZUNGEN AUF DER BASIS VON FLUQUINCONAZOLE

MELANGES FONGICIDES A BASE DE FLUQUINCONAZOLE

(84) Designated Contracting States:
**AT BE CH DE DK ES FR GB GR IE IT LI LU NL PT**

(30) Priority: **01.10.1997 GB 9720832**

(43) Date of publication of application:
**26.07.2000 Bulletin 2000/30**

(73) Proprietor: **Aventis CropScience UK Limited**
**Hauxton, Cambridge CB2 5HU (GB)**

(72) Inventor: **BARDSLEY, Richard, Andrew**
**Saffron Walden Essex CB10 1XL (GB)**

(74) Representative: **Mérigeault, Shona et al**
**Bayer CropScience SA**
**Département Propriété Industrielle**
**B.P. 9163**
**69263 Lyon Cedex 09 (FR)**

(56) References cited:
**EP-A- 0 645 091**
**WO-A-93/22921**
**WO-A-97/00012**

- **PAUL J. DE FRAINE & JOHN M. CLOUGH: "A new series of broad-spectrum beta-methoxyacrylate fungicides with an oxime ether side-chain." PESTIC. SCI., vol. 44, no. 1, - 1995 pages 77-79, XP002020496**

Note: Within nine months from the publication of the mention of the grant of the European patent, any person may give notice to the European Patent Office of opposition to the European patent granted. Notice of opposition shall be filed in a written reasoned statement. It shall not be deemed to have been filed until the opposition fee has been paid. (Art. 99(1) European Patent Convention).



Printed by Jouve, 75001 PARIS (FR)

## Description

Field of the invention

This invention relates to compositions with useful fungicidal properties.

The present invention provides a fungicidal composition comprising

a) fluquinconazole and
b) azoxystrobin.

Fluquinconazole is a known fungicide and is the common name for 3-(2,4-dichlorophenyl)-6-fluoro-2-((1*H*)-1,2,4-triazol-1-yl)-4(3*H*)-quinazolinone). Azoxystrobin is a known fungicide and is the common name for methyl (E)-2-{2-[6-(2-cyanophenoxy)pyrimidin-4-yloxy]phenyl}-3-methoxyacrylate.

Synergistic combinations of structurally different strobilurin fungicides with fluquinconazole have been disclosed in WO 97/00012 A1 and EP 645 091 A1, whereas WO 93/22921 A1 discloses a synergistic combination of azoxystrobin with particular triazoles.

We have found that the mixtures of the invention have advantageous properties over the individual components and that synergism is often demonstrated, and the yield of the treated crop may be increased.

The ratios of the fluquinconazole to azoxystrobin vary over a wide range but are usually in the range 15:1 to 1:10, preferably 5:1 to 1:5, by weight.

In addition, other pesticides may be employed in conjunction with the active ingredients described above providing they do not adversely affect the interaction between the fungicidal components. For example it is sometimes useful to include additional fungicides, such as other triazoles, e.g. propiconazole, epoxiconazole, and flutriafol, imidazoles, such as prochloraz and miscellaneous compounds such as mancozeb, chlorothalonil or pyrimethanil, which extend the range of activity in order to control a wider spectrum of fungi.

The compositions of the invention are active against a wide range of fungi, and especially against mildew diseases of plants, particularly cereal powdery mildew (*Erysiphe graminis*), cucumber powdery mildew (*Erysiphe cichoracearum*), vine downy mildew (*Uncinula necator*), and apple powdery mildew (*Podosphaera leuchotricha*). However some compounds may be active against other pathogens of Deuteromycete, Ascomycete, Phycomycete and Basidiomycete origin, e.g. rice blast (*Pyricularia oryzae*), cereal eyespot (*Pseudocercosporella herpotrichoides*), rice sheath blight (*Pellicularia sasakii*), grey mould (*Botrytis cinerea*), wheat brown rust *(Puccinia recondita*), late tomato or potato blight (*Phytophthora infestans*), apple scab (*Venturia inaequalis*) and glume blotch (*Leptosphaeria nodorum*), *Plasmopara spp*, e.g. *Plasmopara viticola*, *Phytophthora spp*., e.g. *Phytophthora infestans,* and *Pythium* *spp*..

The compositions of the invention may be employed in many forms and are often most conveniently prepared immediately prior to use by mixing the ingredients in their commercially available form, if necessary in a quantity of water.

In addition to tank mixing immediately priop to use, compositions containing fluquinconazole and azoxystrobin may be formulated into a concentrate or in a ready for use form.

Suitable concentrates are generally those known the art for the formulation of agrochemicals, for example, a solution, a dispersion, an aqueous emulsion, a dispersible powder, an emulsifiable concentrate or granules.

In addition it may be desirable to include a phosphonate or phosphinate of formula I

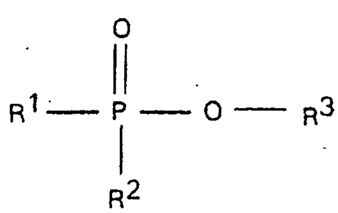

(I)

where

$R^1$ is $C_{6-20}$-alkyl, $C_{6-20}$-alkoxy or optionally substituted phenyl

$R^2$ is benzyl, $C_{6-20}$-alkyl, optionally interrupted by NH or O, di-$C_{6-20}$-alkylamino or the group

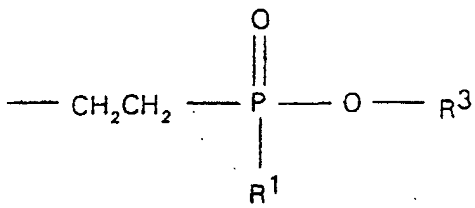

and

$R^3$ is $C_{6-20}$-alkyl.

A particularly useful additive is di(2-ethylhexyl) octylphosphonate.

The concentration of the active ingredients (when used as the sole active components) in a composition for direct application to the crop by conventional methods is preferably within the range of 0.01 to 10 per cent by weight of the composition, especially 0.005 to 5 per cent by weight, but more concentrated compositions containing up to 40 per cent may be desirable.

The composition of the invention can be applied directly to plants by, for example, spraying either at the time which the fungus has begun to appear on the plant or before the appearance of fungus, as a protective measure. A suitable rate of application of the fluquinconazole is from 25 to 500 grams per hectare.

The invention thus includes a method for controlling a phytopathogenic fungus which comprises applying to seeds, plants and other vegetative material or their habitat a) fluquinconazole and b) azoxystrobin, components (a) and (b) being applied either together or in sequence.

The invention is illustrated in the following examples

Example 1

Wheat plants were inoculated with *Erysiphe graminis* (powdery mildew). Two days after inoculation, they were sprayed with fluquinconazole, obtained by diluting with water to the desired concentration, a suspension concentrate comprising 10% by weight active ingredient, or azoxystrobin obtained by diluting with water to the desired concentration, the commercial product sold under the trade name "Amistar", or mixtures of these.

One week after inoculation, the wheat was assessed for control of disease. The results are as follows.

To indicate the existence of synergism between the active components the results were treated in the manner described by Colby S.R., "Calculating Synergistic and Antagonistic Responses of Herbicide Combinations" in Weeds 1967 15, 20-22). In this method the "expected" percent control of growth, E, of the combination compared with untreated control is given by the equation

$$E = A + F - \frac{AF}{100}$$

where A is the % control by azoxystrobin used alone at a given concentration and F is the % control by fluquinconazole, used alone at a given concentration. If the observed control of the mixture is greater than E the results indicate synergism. The results are as follows. In the table, component "az" is azoxystrobin and "fq" is fluquinconazole.

Table 1

| Component | Application rate | % Control | |
|---|---|---|---|
| | (g cpd/ha) | Observed | Expected (E) |
| az | 187.5 | 62 | |
| az | 125 | 42 | |
| az | 62.5 | 12 | |
| az | 31.25 | 10 | |
| fq | 31.25 | 70 | |
| fq | 15.25 | 24 | |

Table 1 (continued)

| Component | Application rate | % Control | |
|---|---|---|---|
| | (g cpd/ha) | Observed | Expected (E) |
| az + fq | 187.5 + 31.25 | 100 | 88 |
| az + fq | 125 + 31.25 | 100 | 82 |
| az + fq | 62.5 + 31.25 | 100 | 73 |
| az + fq | 31.25 + 31.25 | 98 | 72 |
| az + fq | 187.5 + 15.25 | 100 | 71 |
| az + fq | 125 + 15.25 | 100 | 55 |
| az + fq | 62.5 + 15.25 | 100 | 33 |
| az + fq | 31.25 + 15.25 | 90 | 31 |

Example 2

In a similar manner, Example 1 was repeated with spraying one day after inoculation. The results are as follows

Table 2

| Component | Application rate (g cpd/ha) | % Control | |
|---|---|---|---|
| | | Observed | Expected (E) |
| az | 62.5 | 0 | |
| az | 31.25 | 0 | |
| fq | 31.25 | 68 | |
| fq | 15.25 | 12 | |
| az + fq | 62.5 + 31.25 | 99 | 68 |
| az + fq | 31.25 + 31.25 | 96 | 68 |
| az + fq | 62.5 + 15.25 | 72 | 12 |
| az + fq | 31.25 + 15.25 | 49 | 12 |

**Claims**

**1.** A fungicidal composition comprising

a) fluquinconazole and
b) azoxystrobin

**2.** A composition according to claim 1 wherein the weight ratio of fluquinconazole to azoxystrobin is in the range 5:1 to 1:5.

**3.** A method for controlling a phytopathogenic fungus which comprises applying to seeds, plants and other vegetative material or their habitat

a) fluquinconazole and
b) azoxystrobin.

**Patentansprüche**

**1.** Fungizide Zusammensetzung mit

a) Fluquinconazol und
b) Azoxystrobin.

**2.** Zusammensetzung nach Anspruch 1, bei der das Gewichtsverhältnis von Fluquinconazol zu Azoxystrobin im Bereich von 5:1 bis 1:5 liegt.

**3.** Verfahren zur Bekämpfung eines phytopathogenen Pilzes, bei dem man

a) Fluquinconazol und
b) Azoxystrobin

auf Saatgut, Pflanzen und anderes vegetatives Material oder deren Umgebung ausbringt.

## Revendications

**1.** Composition fongicide comprenant

a) le fluquinconazole et
b) l'azoxystrobin

**2.** Composition selon la revendication 1 dans laquelle le rapport en poids du fluquinconazole à l'azoxystrobin est dans l'intervalle de 5:1 à 1:5.

**3.** Procédé de contrôle d'un champignon phytopathogène qui comprend l'application aux semences, aux plantes et autres matières végétales ou à leur habitat de

a) le fluquinconazole et
b) l'azoxystrobin